# FASCICULE DE BREVET EUROPEEN

(11) **EP 0 929 080 B1**
(45) Date de publication et mention de la délivrance du brevet: **31.03.2004**
(21) Numéro de dépôt: 99400058.6
(22) Date de dépôt: 12.01.1999
(51) Int. Cl.: G21F 9/30, G21F 9/00

(54) **Procédé pour conditionner des résines échangeuses d'ions chargées en ions radioactifs et/ou polluants**
Verfahren zur Konditionierung von mit Radioactiv- und/oder Verunreinigenden Ionen beladenen Ionenaustauschharzen
Process for conditioning ion-exchange resins loaded with radioactive and/or polluting ions

(30) Priorité: 12.01.1998 FR 9800198
(43) Date de publication de la demande: 14.07.1999
(73) Titulaire: BOUYGUES TRAVAUX PUBLICS, 78280 Guyancourt (FR)
(72) Inventeur: Comte, Germain, 91410 Dourdan (FR); Vernet, Christian, 78200 Jouy Mauvoisin (FR)
(74) Mandataire: Schrimpf, Robert

(56) Documents cités:
- EP-A- 0 104 656
- EP-A- 0 319 398
- WO-A-88/09040
- WO-A-94/09904
- DE-A- 3 343 422
- FR-A- 2 290 745
- FR-A- 2 472 818
- US-A- 4 196 169
- US-A- 4 904 416
- US-A- 5 463 171

## Description

L'invention concerne le conditionnement de résines échangeuses d'ions polluées dans un récipient de conditionnement et elle s'applique notamment au conditionnement de résines radioactives.

Il a été proposé pour décontaminer l'eau d'une piscine de réacteur de mettre cette eau au contact de particules de résine en sorte que ces particules fixent les éléments radioactifs ou polluants présents sous forme ionique dans l'eau considérée.

Le problème se pose alors de conditionner les résines devenues radioactives pour les isoler de l'environnement.

Différentes techniques ont été proposées pour conditionner des résines devenues toxiques dans une matrice cimentaire durcie par dispersion des résines dans la matrice avant durcissement de la matrice dans le récipient de conditionnement.

La publication EP-A1-0319398 préconise de réaliser la matrice à partir de ciment alumineux et de ciment non alumineux, d'un composé siliceux et d'adjuvants particuliers tels qu'un composé de bore et d'un pourcentage d'eau libre ajoutée, très faible, l'essentiel de l'eau étant fourni par l'eau intersticielle des résines qui sont saturées d'eau.

Du fait du très faible pourcentage d'eau ajouté, le mélange des constituants de la matrice ne peut se faire que dans le récipient de conditionnement où ce mélange bénéficie de l'apport d'eau prépondérant des particules de résine, et de fait, tous ces constituants sont introduits directement dans le récipient.

La publication FR-A-2472818 préconise également de saturer les résines avec de l'eau, de réaliser la matrice cimentaire uniquement à partir de ciment et d'eau ajoutée dans un rapport eau/ciment de 0,20 à 0,40, mais le rapport global compte tenu de l'eau de saturation des résines étant dans la gamme 0,40-0,90.

La publication US 4 904 416 préconise un prétraitement des résines déshydratées avec du ciment puis de leur ajouter du ciment et de l'eau.

La publication PCT WO 8 809 040 préconise de traiter les résines décantées par une solution aqueuse d'un éluant et de les malaxer avec un ciment au laitier, le rapport eau/ciment étant égal à 0,5.

De fait, l'eau de saturation des résines toxiques contient souvent des sels gênants, tant par leurs propriétés toxiques que par leur niveau de réactivité élevé, l'emploi de ciment alumineux est une source de risque vis-à-vis des agressions chimiques, l'introduction directe des constituants pulvérulents dans le récipient peut poser des problèmes, le malaxage dans le récipient nécessite une énergie de malaxage importante, la nécessité de disposer d'un équipement important à proximité immédiate du récipient de conditionnement, c'est-à-dire en « zone chaude », est contraignante et peu économique et les temps d'intervention des opérateurs dans cette zone sont difficiles à minimiser.

Enfin, les performances des matrices préconisées sont médiocres.

La présente invention vise notamment à éviter ces inconvénients.

On y parvient selon l'invention en mettant en oeuvre un procédé caractérisé en ce qu'on élimine des résines la majeure partie de leur eau intersticielle avant de les introduire dans le récipient de conditionnement, on prépare en dehors du récipient de conditionnement une pâte cimentaire fluide apte à former par durcissement une matrice étanche à l'eau en choisissant la formulation de la pâte en sorte que le total de l'eau de la pâte et de l'eau intersticielle résiduelle des résines soit suffisant pour durcir la pâte mais inférieur à ce qui serait nécessaire pour hydrater tout le ciment de la pâte, on injecte la pâte à l'état fluide dans le récipient de conditionnement, on malaxe la pâte et les résines pour répartir les résines au sein de la pâte et on laisse durcir la pâte.

La pâte cimentaire peut donc être préparée en zone « froide » avec des installations classiques dont l'emploi serait impossible ou très contraignant en zone « chaude ».

Le ciment excédentaire dans la matrice durcie réagit progressivement dans le temps avec l'eau de structure des particules de résine provoquant une dessiccation de ces particules, lesquelles se contractent en laissant entre elles et la matrice des espaces vides où les particules ne sont plus en contact avec la matrice, ce qui permet d'éviter une attaque chimique de la matrice cimentaire durcie par les résines tandis que l'étanchéité de la matrice interdit une introduction d'eau depuis l'extérieur qui pourrait provoquer un gonflement des résines.
Pour préparer la pâte cimentaire, on utilise de préférence, outre le ciment, des constituants granulaires, par exemple du sable, en particulier un sable dont les grains ont une grosseur au plus égale à 1200 micromètres, et/ou des grains de quartz dont la grosseur peut être encore inférieure. De préférence, on choisit les proportions et les granulométries respectives du ciment, des constituants granulaires, par exemple du sable et/ou de la farine de quartz, et des constituants encore plus fins, notamment des éléments à réaction pouzzolanique, par exemple des fumées de silice, pour obtenir une matrice desserrée, c'est-à-dire dont les constituants solides d'une gamme de granulométrie donnée sont séparés par des constituants solides d'une gamme de granulométrie inférieure.

Dans des exemples typiques, on utilise un rapport en poids E/C (eau/ciment) inférieur à 0,36, ou encore mieux inférieur à 0,26 ou encore mieux inférieur à 0,21.

Les brevets français n° 93 08063 et n° 94 02801 (publications n° 2 707 625 et n° 2 708 263) décrivent des compositions particulièrement appropriées pour la réalisation de la matrice cimentaire adéquate pour la présente invention, en raison notamment de leur faible teneur en eau par rapport au ciment qui permet néanmoins de préparer une pâte facilement injectable et en raison des performances mécaniques remarquables des compositions durcies.

On essore les résines, par exemple par filtration, avant de les mélanger à la pâte cimentaire, pour en éliminer la majeure partie de l'eau intersticielle, par exemple jusqu'à un pourcentage d'eau intersticielle résiduelle inférieur à 10%, de préférence 2 à 5%, du poids des résines. Dans la pratique, ce pourcentage résiduel dépend des moyens que l'on peut utiliser industriellement pour éliminer l'eau intersticielle.

Le récipient qui reçoit la pâte et les résines comporte, de préférence, un moyen de malaxage, par exemple une pale entraînée en rotation, qui sera perdue dans la matrice durcie.

Le récipient contenant la matrice durcie enrobant les résines sera fermé par un bouchon approprié et stocké.

### Exemple :

### Pâte cimentaire

On prépare une pâte cimentaire (CPC) avec les constituants d'un béton de poudres réactives(« BPR ») qui sont les suivants :

| **Composants** | **Sable** | **Ciment** | **Quartz broyé** | **Fumée de silice** | **Adjuvant** | **Eau** |
|---|---|---|---|---|---|---|
| **Kg/m**^{**3**} | **1072** | **750** | **225** | **244** | **55** | **112** |

Les composants sont :
- sable, type sable de verrerie, de diamètre moyen 310 µm,
- ciment à haute teneur en silicate tricalcique, et à faible teneur en aluminate, de surface spécifique 3400 cm²/g,
- Quartz broyé de diamètre moyen 40 µm,
- Fumée de silice de surface spécifique BET 12 m²/g,
- Adjuvant superplastifiant du type polycarboxylate, en solution a 30%,

Les poudres sont mélangées à sec dans un malaxeur à haute turbulence, puis on y ajoute l'eau contenant la moitié de l'adjuvant. Après un premier malaxage de 2 minutes, on ajoute la deuxième moitié de l'adjuvant, et on malaxe à nouveau pendant deux à trois minutes.

La pâte obtenue présente une très grande fluidité (étalement de l'ordre de 220 à 250 mm mesuré au flow-test ASTM). Elle est facilement injectable dans tous types de récipients, par pompage ou par gravité.

Ces performances rhéologiques sont obtenues malgré le très faible rapport eau/ciment qui représente moins de la moitié de l'eau qui serait nécessaire pour l'hydratation complète du ciment. Il s'ensuit que la réaction chimique d'hydratation du ciment produira une dessiccation interne de la pâte (auto dessiccation) du fait de l'avidité du ciment pour l'eau. Ce séchage endogène est assez puissant pour modifier la structure moléculaire des hydrates (silicates de calcium hydratés ou CSH), par exemple en augmentant leur degré de polymérisation. Les propriétés obtenues en sont fortement améliorées. Ainsi, en fin d'hydratation :
- La micro-porosité capillaire est inférieure à 1%, valeur qui se situe au dessous du seuil de percolation des pores ouverts. Il n'existe donc plus de trajets capillaires connexes traversant les pièces réalisées à l'aide de ce matériau.
- La porosité totale est inférieure à 8% et constituée essentiellement de pores fermés (bulles d'air),
- La perméabilité à l'air est de l'ordre de 10⁻²²m², soit le même ordre de grandeur que pour les roches naturelles compactes comme le granit.
- Les performances mécaniques sont exceptionnelles, notamment plus de 200 MPa en compression, et de l'ordre de 20 Mpa en traction par flexion.

Ces performances garantissent l'intégrité à long terme de la matrice, sa résistance à la lixiviation et son imperméabilité à l'eau et aux gaz.

### Résines

On prépare un mélange 50/50 de deux résines échangeuses d'ions couramment utilisées dans le retraitement des eaux de piscine des centrales nucléaires.

Ces résines sont :
- une résine de type aminophosphorique (S 940 de Purolite international)
- une résine de type méthylénesulfonate (ARC 9359 de Duolite)

Par commodité, on appellera ci-après « REI » le mélange 50/50 de ces deux résines.

Pour simuler le processus de traitement des eaux de piscine nucléaire, on imprègne complètement les résines brutes avec une solution aqueuse, ce qui produit le gonflement de la résine sèche par absorption d'eau dans la structure moléculaire.

Pour déterminer les paramètres des résines utiles pour la mise en oeuvre du procédé de l'invention, on soumet les résines saturées d'eau aux opérations suivantes :
- Elimination de la majeure partie de l'eau intersticielle, par exemple par filtration.
- Elimination de toute l'eau intersticielle sans déshydrater les résines, c'est-à-dire sans éliminer l'eau moléculaire de constitution des résines, par exemple par séchage au torchon.

Sur le plan physique, le mélange REI constitue un empilement granulaire de particules dont l'espace poreux est rempli d'air et d'un faible volume d'eau.

On considère habituellement que la porosité des empilements de REI, qui sont au mieux des sphères d'une dimension voisine de 0,5mm, est au minimum de 36% (porosité d'un empilement de sphères monodispersées). Pour peu que la forme soit un peu anguleuse, cette porosité devient de l'ordre de 42%, valeur connue de l'homme du métier.

Quelques mesures en laboratoire permettent de caractériser cet empilement, de façon à réaliser des mélanges de composition massique et volumique parfaitement déterminées.
- Mesure de la teneur en eau intersticielle, par pesées avant et après élimination partielle ou totale de cette eau.
- Mesure du poids au litre ou densité apparente.
- Mesure de la masse volumique absolue des particules au pycnomètre.

Ainsi, le mélange REI montre une densité apparente de 0.782 kg/litre, pour une masse volumique absolue de 1,17 kg/litre. Sa teneur en eau intersticielle résiduelle après filtration est de 5% en poids.

La mesure de ces paramètres permet de prévoir très exactement quels seront la proportion volumique de REI et la teneur en eau du mélange final avec la pâte cimentaire.

Les tableaux I à III ci-après donnent les caractéristiques des résines et du mélange REI.

### Conditionnement des résines

On mélange la préparation de REI et la pâte cimentaire selon le protocole suivant:
- Introduction d'un poids connu de la préparation REI dans un mélangeur,
- Ajout éventuel de réactifs aptes à réduire l'activité chimique des résines du REI,
- Mélange
- Introduction de la pâte cimentaire,
- Mélange,
- Ajout de stabilisateurs ou de réactifs anti-ségrégation ou gélifiants.
- Mélange final.

Les réactifs de réduction de l'activité chimique des résines vis à vis de la matrice cimentaire peuvent éventuellement être ajoutés au cours du retraitement des eaux de piscine. Ce sont des produits chimiques connus de l'homme de l'art, ajoutés en faible teneur (typiquement 2% du poids de ciment), qui évitent principalement les phénomènes de prise rapide, de raidissement du mélange, ou d'autres phénomènes parasites.

Les produits gélifiants, également connus de l'homme de l'art, visent à éviter la remontée des résines à la surface, du fait de leur grande différence de densité par rapport à la pâte cimentaire. Sans cette précaution, l'eau intersticielle contenue dans les résines du REI risquerait de diluer la matrice cimentaire, et de favoriser ainsi la ségrégation.

Les proportions en masse et volume pour l'exemple traité sont données au tableau IV.

Le mélange de 5 kg de REI et de 5 litres de pâte de matrice cimentaire (MC) conduit à une proportion de 43,5% de REI (en volume absolu) dans le mélange final. Le volume apparent initial des 5kg de REI est de 6,4 litres, et le volume du mélange final est de 9,4 litres, ce qui donne un ratio d'augmentation très favorable de 1,47.

Le mélange final possède un rapport pondéral eau totale/ciment de 0,26, ce qui reste largement inférieur à la valeur stoechiométrique qui serait nécessaire à l'hydratation complète du ciment. Ainsi, l'autodessiccation du composite va permettre de déshydrater les particules de REI dont le volume va diminuer, puis vont cesser rapidement d'être en contact avec la matrice, garantissant la meilleure durabilité du mélange et l'absence de gonflement.

Malgré son énorme proportion de "particules molles", le mélange montre des performances mécaniques très satisfaisantes :

| **Mélanges n°** | **1** | **2** | **3** | **4** | **5** |
|---|---|---|---|---|---|
| **Eau/ciment (pâte cimentaire)** | **0,2** | **0,2** | **0,2** | **0,2** | **0,195** |
| **Fluidifiant type** | **A** | **A** | **B** | **B** | **B** |
| **Réducteur d'activité des REI (% ciment)** | **0** | **1%** | **0** | **1%** | **1%** |
| **Gélifiant (% ciment)** | **1%** | **0** | **1%** | **1%** | **1%** |
| **Echéances des mesures (jours)** | **4** | **8** | **8** | **8** | **4** |
| **Rc (MPa)** | **6,63** | **8,86** | **5,15** | **5,82** | **5,86** |
| **Variation dimensionnelle dans l'eau à 20°C à 28 jours** | | | | **Retrait -1,2.10**^{**-4**} | **Retrait -1,0.10**^{**-4**} |
| A = fluidifiant du type polynaphtalène sulfonate B = fluidifiant du type polycarboxylate | | | | | |

Dans le tableau les rapports sont pondéraux.

Cet exemple permet de constater l'efficacité du procédé, notamment l'absence de gonflement, malgré le mode de conservation dans l'eau choisi ici, qui en général produit déjà un gonflement des pâtes pures de ciment (la conservation en système clos conduirait à un risque moindre de gonflement). Ici on obtient au contraire un retrait du mélange, qui illustre bien l'effet de la réduction de la teneur en eau de gâchage au dessous de la teneur stoechiométrique, produisant ainsi la dessiccation interne. Cet effet a pu être obtenu grâce à la parfaite étanchéité de la matrice, qui n'a pas absorbé d'eau au cours du trempage prolongé.

Les performances mécaniques sont satisfaisantes et dépendent des divers réactifs et adjuvants utilisés. Il est possible d'obtenir à court terme (quelques jours) des valeurs qui ne sont spécifiées pour ce genre d'application qu'à des échéances plus importantes (typiquement 28 jours pour des liants classiques, voire 90 jours pour des mélanges contenant des matériaux pouzzolaniques comme les fumées de silice.

**TABLEAU I**

| (Résines Individuelles) | | | | |
|---|---|---|---|---|
| Type | S940 | | ARC 9359 | |
| Préparation | Séchées torchon | Avec eau interst. résiduelle | Séchées torchon | Avec eau insterst. résiduelle |
| Masse volumique | 1,11 | | 1,23 | |
| % eau intersticielle résiduelle | 0 | 5 | 0 | 5 |
| (en poids) | | | | |
| Poids au litre (kg) | 0,748 | 0,888 | 0,612 | 0,675 |
| Compacité | 0,674 | 0,760 | 0,498 | 0,521 |
| Porosité totale | 0,326 | 0,240 | 0,502 | 0,479 |
| Fraction vol. d'eau intersticielle | 0,000 | 0,04 | 0,000 | 0,034 |
| résiduelle (1) | | | | |
| Fraction vol. d'air | 0,326 | 0,196 | 0,502 | 0,445 |

| | | | | |
|---|---|---|---|---|
| (1) rapport du volume eau intersticielle résiduelle /volume de la résine. | | | | |

**TABLEAU II**

| (Mélanges REI) | | |
|---|---|---|
| Type | Mélanges 50/50 | |
| Préparation | Séchées torchon | Avec eau interst. résiduelle |
| Masse volumique | 1,17 | 1,17 |
| % eau intersticielle résiduelle | 0 | 5 |
| Poids au litre (kg) | 0,680 | 0,782 |
| Compacité | 0,581 | 0,635 |
| Porosité totale | 0,419 | 0,365 |
| Fraction vol. d'eau intersticielle | | |
| résiduelle | 0,000 | 0,039 |
| Fraction vol. d'air | 0,419 | 0,326 |

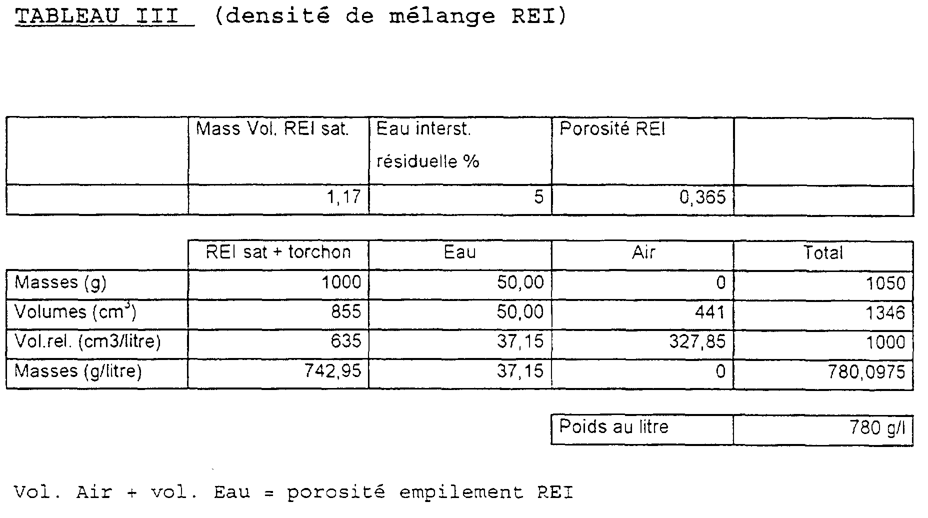

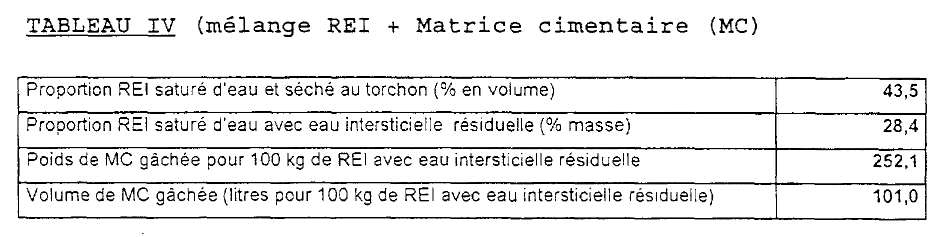

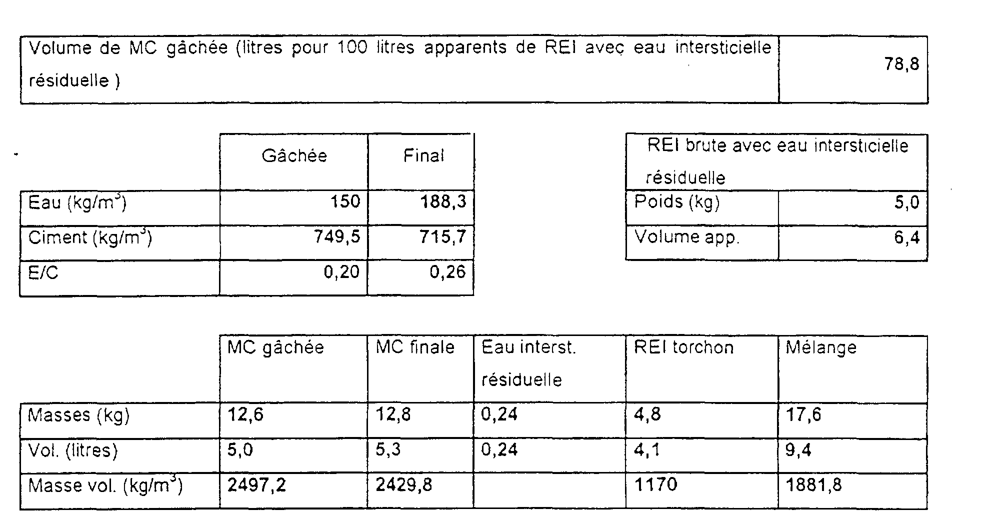

L'invention n'est pas limitée au conditionnement des résines radioactives mais s'applique de façon générale au conditionnement de toute résine toxique susceptible de nuire à l'environnement.

## Revendications

1. Procédé pour conditionner dans un récipient des résines échangeuses d'ions polluées par dispersion de ces résines au sein d'une matrice cimentaire durcie, **caractérisé en ce qu'**on élimine des résines la majeure partie de leur eau intersticielle avant de les introduire dans le récipient de conditionnement, on prépare en dehors du récipient de conditionnement une pâte cimentaire fluide apte à former par durcissement une matrice étanche à l'eau en choisissant la formulation de la pâte en sorte que le total de l'eau de la pâte et de l'eau intersticielle résiduelle des résines soit suffisant pour durcir la pâte mais inférieur à ce qui serait nécessaire pour hydrater tout le ciment de la pâte, on injecte la pâte à l'état fluide dans le récipient de conditionnement, on malaxe la pâte et les résines pour répartir les résines au sein de la pâte et on laisse durcir la pâte.

2. Procédé selon la revendication 1 dans lequel lesdits constituants de la pâte comprennent du ciment, des éléments granulaires, des éléments à réaction pouzzolanique, des adjuvants éventuels et de l'eau.

3. Procédé selon la revendication 2 dans lequel on choisit les proportions et les granulométries des constituants solides de la pâte pour obtenir une matrice dans laquelle les constituants d'une gamme de granulométrie donnée sont séparés par des constituants d'une gamme de granulométrie inférieure.

4. Procédé selon la revendication 2 ou 3 dans lequel on utilise une pâte ayant un rapport pondéral eau/ciment inférieur à 0,30, de préférence inférieur à 0,26 ou mieux inférieur à 0,21.

5. Procédé selon la revendication 3 dans lequel les éléments granulaires de la pâte ont une grosseur maximale de 1200 micromètres.

6. Procédé selon l'une des revendications 2 à 5 dans lequel les éléments granulaires de la pâte comprennent du sable et du quartz.

7. Procédé selon l'une des revendications 2 à 6 dans lequel le ciment est un ciment à haute teneur en silicate tricalcique et à faible teneur en aluminate.

8. Procédé selon l'une des revendications 2 à 7 dans lequel lesdits éléments à réaction pouzzolanique comprennent de la fumée de silice.

9. Procédé selon l'une des revendications 2 à 8 dans lequel lesdits adjuvants comprennent un ou plusieurs adjuvants choisis dans le groupe constitué par les super-plastifiants, les gélifiants et les adjuvants de stabilisation.

10. Procédé selon l'une des revendications 1 à 9 dans lequel on élimine l'eau intersticielle des résines jusqu'à un poids résiduel inférieur à 10%, de préférence 2 à 5% du poids des résines.

11. Procédé selon l'une des revendications 1 à 10 dans lequel ledit malaxage dans le récipient est réalisé au moyen d'une pale rotative qui est perdue dans la matrice durcie.

12. Application d'un procédé selon l'une des revendications précédentes au conditionnement de résines radioactives.

## Claims

1. Process for encapsulating contaminated ion-exchange resins in a container, by dispersing these resins within a hardened cementitious matrix, **characterized in that** most of the interstitial water of the said resins is removed therefrom before they are introduced into the encapsulating container, a fluid cement slurry is prepared outside the encapsulating container, the said slurry being capable of forming a water-impermeable matrix upon hardening, by choosing the formulation of the slurry in such a way that all of the water of the slurry and of the residual interstitial water of the resins is sufficient to harden the slurry but less than that which would be needed to hydrate all the cement of the slurry, the slurry is injected in the fluid state into the encapsulating container, the slurry is mixed with the resins in order to distribute the resins within the slurry, and the slurry is left to harden.

2. Process according to Claim 1, in which the said constituents of the slurry comprise cement, granular aggregates, aggregates that undergo a pozzolanic reaction, optional admixtures and water.

3. Process according to Claim 2, in which the proportions and the particle sizes of the solid constituents of the slurry are chosen in order to obtain a matrix in which the constituents of a given particle size range are separated by constituents of a smaller particle size range.

4. Process according to Claim 2 or 3, in which a slurry having a water/cement weight ratio of less than 0.3, preferably less than 0.26 or better still less than 0.21 is used.

5. Process according to Claim 3, in which the granular aggregates of the slurry have a maximum size of 1200 microns.

6. Process according to one of Claims 2 to 5, in which the granular aggregates of the slurry comprise sand and quartz.

7. Process according to one of Claims 2 to 6, in which the cement is a cement having a high tricalcium silicate content and a low aluminate content.

8. Process according to one of Claims 2 to 7, in which the said aggregates undergoing a pozzolanic reaction comprise silica fume.

9. Process according to one of Claims 2 to 8, in which the said admixtures comprise one or more admixtures chosen from the group formed by superplasticizers, gelling agents and stabilizers.

10. Process according to one of Claims 1 to 9, in which the interstitial water of the resins is removed down to a residual weight of less than 10%, preferably 2 to 5%, by weight of the resins.

11. Process according to one of Claims 1 to 10, in which the said mixing is carried out in the container by means of a rotary blade that is lost in the hardened matrix.

12. Application of a process according to one of the preceding claims to the encapsulation of radioactive resins.

## Patentansprüche

1. Verfahren zur Konditionierung von verunreinigten Ionenaustauscherharzen in einem Behälter durch Dispergierung dieser Harze innerhalb einer zementartigen gehärteten Matrix, **dadurch gekennzeichnet, dass** man aus den Harzen den Hauptteil von deren Porenwasser entfernt, bevor diese in den Konditionierungsbehälter eingefüllt werden, man außerhalb des Konditionierungsbehälters eine fluide, zementartige, breiartige Masse herstellt, welche in der Lage ist, durch Härtung eine wasserdichte Matrix zu bilden, indem man die Rezeptur der breiartigen Masse derart wählt, dass die Gesamtmenge des Wassers der breiartigen Masse und des restlichen Porenwassers der Harze ausreichend ist, um die breiartige Masse zu härten, aber unter jener liegt, die erforderlich wäre, um den gesamten Zement der breiartigen Masse zu hydratisieren, man die breiartige Masse in fluidem Zustand in den Konditionierungsbehälter einspritzt, man die breiartige Masse und die Harze durch Kneten mischt, um die Harze innerhalb der breiartigen Masse zu verteilen, und man die breiartige Masse aushärten lässt.

2. Verfahren nach Anspruch 1, in welchem die Bestandteile der breiartigen Masse Zement, körnchenförmige Elemente, Elemente mit Puzzolanerde-Reaktion, gegebenenfalls zugesetzte Hilfsstoffe und Wasser umfassen.

3. Verfahren nach Anspruch 2, in welchem man die Anteile und die Korngrößen der festen Bestandteile der breiartigen Masse wählt, um eine Matrix zu erhalten, in welcher die Bestandteile eines gegebenen Korngrößenbereichs durch Bestandteile eines niedrigeren Korngrößenbereichs getrennt werden.

4. Verfahren nach Anspruch 2 oder 3, in welchem man eine breiartige Masse einsetzt, welche ein Gewichtsverhältnis Wasser/Zement unter 0,30, vorzugsweise unter 0,26 oder noch besser unter 0,21 aufweist.

5. Verfahren nach Anspruch 3, in welchem die körnchenförmigen Elemente der breiartigen Masse eine maximale Größe von 1200 Mikrometern aufweisen.

6. Verfahren nach einem der Ansprüche 2 bis 5, in welchem die körnchenförmigen Elemente der breiartigen Masse Sand und Quarz umfassen.

7. Verfahren nach einem der Ansprüche 2 bis 6, in welchem der Zement ein Zement mit hohem Gehalt an Tricalciumsilicat und mit einem niedrigen Gehalt an Aluminat ist.

8. Verfahren nach einem der Ansprüche 2 bis 7, in welchem die Elemente mit Puzzolanerde-Reaktion Kieselpuder umfassen.

9. Verfahren nach einem der Ansprüche 2 bis 8, in welchem die Hilfsstoffe einen oder mehrere Hilfsstoffe, ausgewählt in der Gruppe gebildet aus den Superweichmachern, den gelbildenden Mitteln und den Stabilisierungshilfsstoffen, umfassen.

10. Verfahren nach einem der Ansprüche 1 bis 9, in welchem man das Porenwasser der Harze bis zu einem restlichen Gewicht unter 10%, vorzugsweise 2 bis 5% des Gewichts der Harze entfernt.

11. Verfahren nach einem der Ansprüche 1 bis 10, in welchem das Kneten in dem Behälter mittels eines sich drehenden Paddels, das in der gehärteten Matrix zurückbleibt, ausgeführt wird.

12. Anwendung eines Verfahrens nach einem der vorangegangenen Ansprüche bei der Konditionierung von radioaktiven Harzen.
